**Europäisches Patentamt**

**European Patent Office**

**Office européen des brevets**

(19)

(11) Numéro de publication: **0 055 667**

**A1**

(12)

# DEMANDE DE BREVET EUROPEEN

(21) Numéro de dépôt: **81402063.2**

(22) Date de dépôt: **23.12.81**

(51) Int. Cl.³: **A 21 C 15/04**
**B 26 D 7/01**

(30) Priorité: **24.12.80 FR 8027433**

(43) Date de publication de la demande:
**07.07.82 Bulletin 82/27**

(84) Etats contractants désignés:
**AT BE CH DE GB IT LI LU NL SE**

(71) Demandeur: **Vernois, Christian**
**5, Rue Joubert**
**F-75009 Paris(FR)**

(72) Inventeur: **Vernois, Christian**
**5, Rue Joubert**
**F-75009 Paris(FR)**

(74) Mandataire: **Boutin, Antoine et al,**
**CABINET PIERRE LOYER 18, rue de Mogador**
**F-75009 Paris(FR)**

(54) Machine pour le découpage automatique de la croûte des tranches de produits panifiés.

(57) La machine comporte un arbre d'entraînement unique 3, commandant de manière combinée un dispositif d'alimentation et d'éjection des tranches à traiter, un emporte-pièce 8, deux demi-volets mobiles 17, destinés à venir supporter le bord de la tranche avant le découpage de la croûte.

Fig.1

EP 0 055 667 A1

1

## Machine pour le découpage automatique de la croûte des tranches de produits panifiés.

La présente invention concerne une machine pour le découpage automatique de la croûte des tranches de produits panifiés.

Les toasts ou canapés servis dans les réceptions et cocktails sont en général confectionnés à partir de tranches de pain de mie dont on a préalablement ôté la croûte.

Actuellement, cette opération de découpage s'effectue manuellement à l'aide d'un emporte-pièce et, de ce fait, elle est longue et fastidieuse.

La présente invention vise à procurer une machine permettant d'effectuer automatiquement et rapidement le découpage de la croûte de tranches de pain de mie destinées à la confection de canapés.

A cet effet, la machine conforme à l'invention est caractérisée en ce qu'elle comporte :

Un arbre d'entraînement unique commandant de manière combinée :

- un dispositif d'alimentation et d'éjection des tranches de pain mie ;

- un emporte-pièce ;

- deux demi-volets mobiles destinés à venir supporter le bord de la tranche, avant le découpage de la croûte.

La machine conforme à l'invention est également remarquable par les caractéristiques suivantes :

- Un support fixe de forme complémentaire au contour de l'emporte-pièce est disposé sous celui-ci et les demi-volets de support du bord de la tranche viennent entourer le support fixe en laissant un espace suffisant pour le passage de l'emporte-pièce.

- L'emporte-pièce porte à sa base deux ergots trancheurs destinés à couper en deux parties le bord de croûte.

- L'emporte-pièce est muni de deux butées agissant en fin de course sur deux éjecteurs destinés à décoller la croûte qui pourrait adhérer aux parois de l'emporte-pièce,

- Le dispositif de commande du mouvement des demi-volets de support de la croûte comporte des moyens élastiques de retard du mouvement de retrait des demi-volets à partir de leur position proche du support fixe.

D'autres caractéristiques et avantages de l'invention ressortiront de la description qui va suivre d'un exemple non limitatif de réalisation d'une machine conforme à l'invention.

La description sera mieux comprise en se référant aux dessins annexés, dans lesquels :

La figure 1 est une vue schématique de face des organes de la machine selon l'invention ;

La figure 2 est une vue schématique de profil de la machine représentée à la figure 1 ;

La figure 3 est une vue de dessus des organes de la machine représentée à la figure 2.

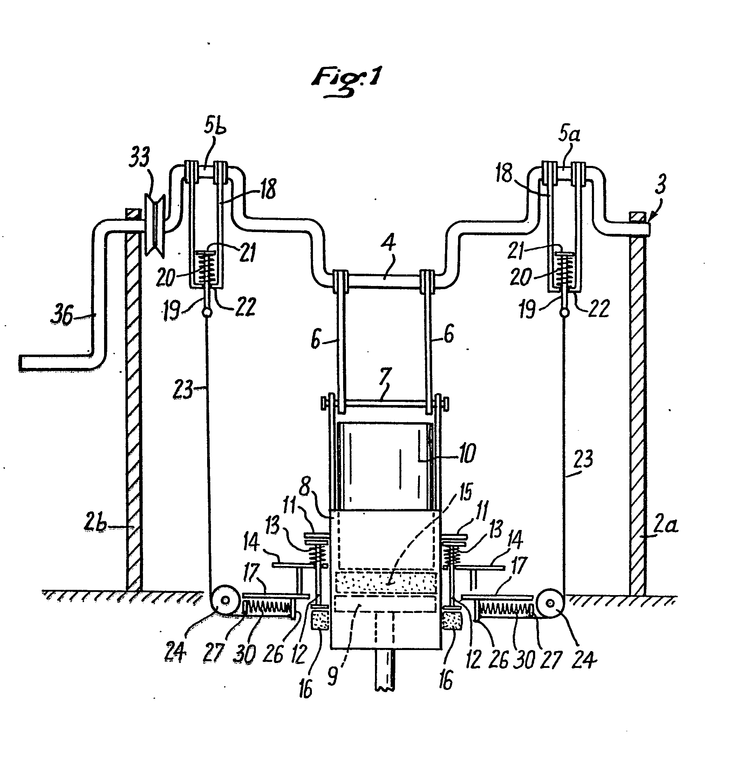

Vue sur la figure 1, la machine comporte un plateau de support 1, sur lequel est fixé un portique constitué par deux montants 2a, 2b. Sur ledit portique est monté à rotation un arbre d'entraînement 3, qui, dans l'exemple de réalisation représenté, forme un vilebrequin. Comme on le voit sur la figure 1, le vilebrequin 3 comporte un palier central 4 et deux paliers latéraux 5a et 5b opposés au palier central par rapport à l'axe de rotation de l'arbre 3.

Autour du palier 4, tourillonne l'extrémité d'au moins une bielle 6 dont l'autre extrémité tourillonne sur un axe 7 portant un organe de découpe ou emporte-pièce 8, qui sera décrit plus en détail ci-après. On voit que la rotation de l'arbre 3 provoquera un mouvement cyclique de translation de l'emporte-pièce 8 dans le sens vertical.

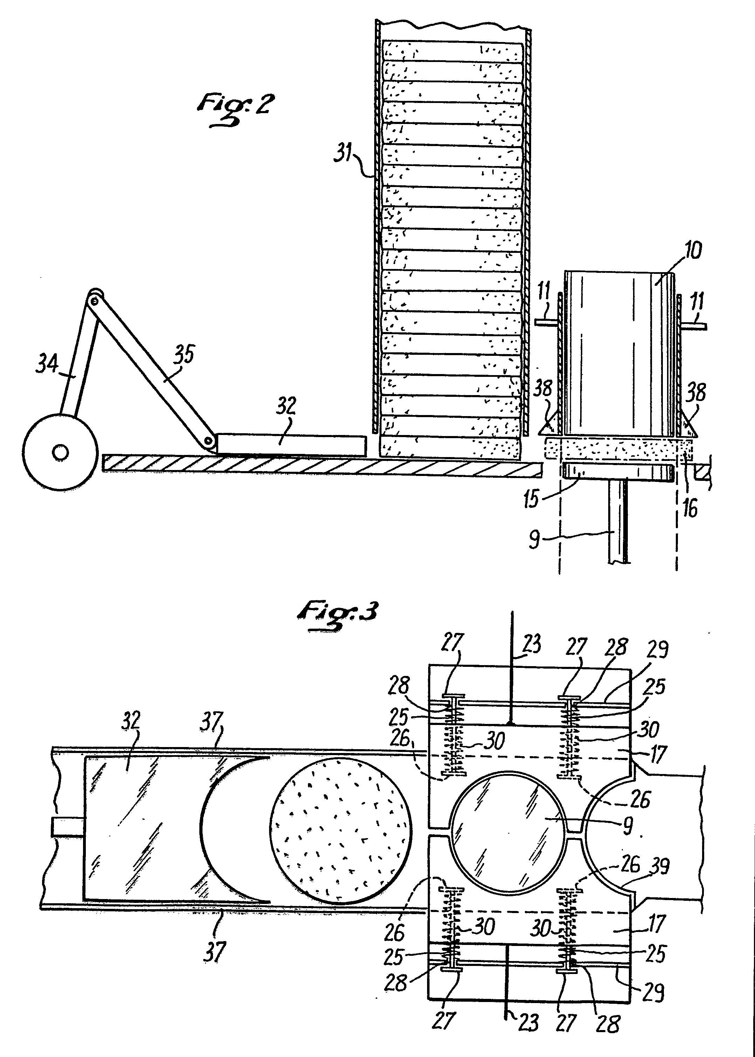

L'emporte-pièce coopère avec un support fixe 9 dont la forme correspond au contour de l'emporte-pièce, de telle sorte que ce dernier puisse passer autour dudit support avec un faible jeu. Dans l'exemple représenté, ledit support 9 et le contour de l'emporte-pièce 8 sont circulaires (figure 3). Pour éviter tout risque de déviation de la trajectoire de l'emporte-pièce, un guide fixe 10 est monté dans le prolongement du support 9.

La hauteur de ce guide 10 est telle qu'il dépasse le bord supérieur de l'emporte-pièce 8, quelle que soit la position de ce dernier. Le guide est solidarisé au plateau 1 par des pattes, non représentées, fixées sur la partie supérieure du guide 10.

Sur l'emporte-pièce 8 sont en outre fixées deux butées 11, qui agissent sur deux éjecteurs 12, montés sur des ressorts 13 et supportés par des plaques 14 sur le plateau 1.

On voit qu'en s'abaissant, l'emporte-pièce 8 vient découper la tranche de pain de mie 15 au ras du support 9, alors qu'en fin de course vers le bas, les butées 11 agissent sur les éjecteurs 12 pour détacher les chutes 16 qui pourraient adhérer à la paroi de l'emporte-pièce 8. Lors du mouvement de remontée de l'emporte-pièce, les éjecteurs 12 sont rappelés en position non active par les ressorts 13.

Du fait de la relative souplesse des tranches de pain à découper, il est nécessaire, pour obtenir une bonne découpe, que, au moment de la découpe, la tranche soit soutenue non seulement en son milieu, mais également à sa périphérie. Du fait de la présence des éjecteurs 12, il est nécessaire que les moyens de support périphériques soient rétractables pour permettre l'action desdits éjecteurs après la découpe.

A cet effet, selon l'invention, deux demi-volets 17 sont animés d'un mouvement alternatif de va-et-vient dans un plan horizontal, de telle sorte qu'ils viennent entourer le support fixe 9 en laissant un espace suffisant pour le passage de l'emporte-pièce 8. Ce mouvement est synchronisé avec le mouvement de l'emporte-pièce, de telle sorte que les demi-volets 17 sont en position de support de la périphérie du pain de mie, au moment de la découpe et commencent à s'effacer immédiatement après celle-ci.

Les mouvements des demi-volets 17 sont commandés à partir de l'arbre 3. Dans l'exemple représenté, les demi-volets 17 et leurs dispositifs de commande étant identiques et disposés symétriquement sur l'arbre 3, de part et d'autre du palier 4, on décrira un seul d'entre eux.

Sur le palier 5a un étrier 18 est monté à rotation. L'étrier 18 porte une tige 19 entourée par un ressort 20, emprisonné entre la butée 21 de la tige et la traverse 22 de l'étrier 18. La traverse 22 comporte un passage à travers lequel la tige 19 coulisse.

A l'extrémité libre de la tige 19, est fixé un câble 23, dont l'autre extrémité agit sur le demi-volet 17 par l'intermédiaire d'une poulie de renvoi 24.

Comme on le voit sur la figure 3, le demi-volet 17 est monté élastiquement par l'intermédiaire d'au moins une tige 25 située sous ledit demi-volet dont l'une des extrémités est fixée sur une patte 26 et dont l'autre extrémité, munie d'une butée 27, peut coulisser à travers une ouverture 28, d'une paroi porteuse 29, solidaire du bâti de la machine. Autour de la tige entre la butée 27 et la patte 26 est emprisonné un ressort 30. Ce ressort tend à maintenir le demi-volet dans sa position active de support du bord de croûte autour du support fixe 9.

On comprend que lors de la rotation de l'arbre 3, le mouvement de montée du palier 5a, pendant le mouvement de descente du palier 4 qui pilote l'emporte-pièce 8, provoque une traction vers le haut du câble 23, ladite traction verticale étant transformée en traction horizontale par l'intermédiaire de la poulie de renvoi 24.

D'autre part, pour éviter que le demi-volet 17 ne commence son mouvement de retrait avant que l'emporte-pièce 8 ait complètement découpé la croûte, ce mouvement de retrait est retardé par la présence du ressort 20 sur l'extrémité du câble 23 fixée à l'étrier 18. Le ressort 20 est en effet plus faible que le ressort 30 associé à l'autre extrémité du câble. Ainsi, la traction consécutive à l'élévation du palier 5a ne s'exercera effectivement sur le demi-volet 17 que lorsque le ressort 20 aura été comprimé.

Sur la figure 2 est représenté schématiquement le dispositif d'alimentation et d'éjection des tranches de pain.

A proximité immédiate de l'emporte pièce 8, un réservoir 31, dans lequel les tranches à traiter sont empilées, est fixé sur le plateau 1. Ledit réservoir est constitué par un simple tube, monté sur le plateau, de telle sorte qu'il existe entre son extrémité inférieure et le plateau un espace suffisant pour le passage d'une tranche de pain et du poussoir décrit ci-après.

Un poussoir 32 est animé d'un mouvement de va-et-vient dans le plan horizontal à la surface du plateau 1. Ce mouvement est commandé à partir de l'arbre 3 par l'intermédiaire d'une poulie 33 (figure 1) et d'une courroie non représentée qui agissent sur un ensemble bielle-manivelle 34-35.

Comme on le voit sur la vue en plan de la figure 3, le poussoir 32 comporte un évidement de forme complémentaire à celle des tranches de pain à traiter. D'autre part, afin d'assurer un guidage du poussoir 32, on a fixé sur le plateau 1 deux glissières 37.

On remarque également sur cette figure que, en position active, les deux demi-volets 17 ne viennent pas en butée l'un contre l'autre. L'écart qui en résulte est destiné au passage de deux ergots trancheurs 38, fixés à la périphérie de l'emporte-pièce 8 (figure 2). Ainsi, la croûte 16 est séparée en deux parties, ce qui facilite son éjection vers le bas par les éjecteurs 12.

Les demi-volets 17 comportent également sur leur côté opposé au dispositif d'alimentation un évidement de forme correspondant avec une avancée 39 du plateau 1. Cette avancée 39 a pour objet de combler en grande partie le vide entre le support fixe 9 et le bord du plateau 1, lorsque les demi-volets 17 sont en position rétractée pour éviter que les tranches de pain éjectées après découpe ne viennent se coincer entre le plateau et le support fixe.

De manière avantageuse, le réservoir d'alimentation, l'emporte-pièce, le poussoir et les demi-volets sont démontables. On peut ainsi adapter à la machine toutes pièces équivalentes pour obtenir différents contours de découpe des tranches de pain, par exemple en carré , en triangle, en étoile, ou tout autre contour de fantaisie.

Dans l'exemple représenté, la machine est mise en oeuvre manuellement par l'intermédiaire de la manivelle 26, solidaire de l'arbre 3 (figure 1).

Il va de soi que la force motrice peut être délivrée par tout autre moyen approprié. Lorsqu'on utilise un moteur, il y a lieu d'y associer un réducteur de vitesse, de telle sorte que le rythme de l'arbre 3 soit compris entre 30 et 50 tours/minute.

De même, sans sortir du cadre de l'invention, on peut utiliser en variante d'autres dispositifs de transmission des mouvements créés à partir de l'arbre 3. On peut, par exemple, utiliser une chaîne, une courroie crantée ou des pignons pour l'entraînement du poussoir et des cames pour l'entraînement de l'emporte-pièce et des demi-volets.

Revendications de brevet

1. Machine pour le découpage automatique de la croûte de tranches de produits panifiés, caractérisée en ce qu'elle comporte un arbre d'entraînement unique (3) commandant de manière combinée :

- un dispositif d'alimentation et d'éjection (32) ;
- un emporte-pièce (8) ;
- deux demi-volets mobiles (17) destinés à venir supporter le bord de la tranche avant le découpage de la croûte.

2. Machine selon la revendication 1, caractérisée en ce qu'elle comporte un support fixe (9) de la partie centrale de la tranche de forme complémentaire au contour de l'emporte-pièce et disposé sous celui-ci et en ce que, en position active, les demi-volets (17) viennent entourer ledit support fixe en laissant un espace suffisant pour le passage de l'emporte-pièce (8).

3. Machine selon la revendication 1 ou 2, caractérisée en ce que l'arbre d'entraînement (3) est un vilebrequin.

4. Machine selon la revendication 3, caractérisée en ce que le vilebrequin comporte un palier central (4) coopérant avec l'emporte-pièce (8) et deux paliers latéraux (5a, 5b) opposés audit palier central (4) et coopérant chacun avec l'un des demi-volets (17).

5. Machine selon l'une quelconque des revendications 1 à 4, caractérisée en ce que l'emporte-pièce (8) porte au moins une butée (11) agissant en fin de course sur au moins un éjecteur (12) assurant le détachement du bord de croûte (16).

6. Machine selon l'une quelconque des revendications précédentes, caractérisée en ce que les moyens de commande des demi-volets (17) comportent des moyens élastiques (20, 30) de retard du mouvement de retrait desdits volets.

7. Machine selon l'une quelconque des revendications précédentes, caractérisée en ce que l'emporte-pièce (8) comporte des moyens (38) pour couper en deux parties le bord de croûte.

Fig:1

Fig. 2

Fig. 3

0055667

Office européen
des brevets

**RAPPORT DE RECHERCHE EUROPEENNE**

Numéro de la demande

EP 81 40 2063

| Catégorie | Citation du document avec indication, en cas de besoin, des parties pertinentes | Revendication concernée |
|---|---|---|
| A | <u>GB - A - 1 319 605</u> (HANDLEY) | 1 |

---------

**CLASSEMENT DE LA DEMANDE (Int. Cl. 3)**

A 21 C 15/04
B 26 D 7/01

**DOMAINES TECHNIQUES RECHERCHES (Int. Cl. 3)**

A 21 C
B 26 D

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| | | |
|---|---|---|
| X | Le présent rapport de recherche a été établi pour toutes les revendications | |
| Lieu de la recherche | Date d'achèvement de la recherche | Examinateur |
| La Haye | 26-03-1982 | VROMMAN |

OEB Form 1503.1   06.78